# EUROPEAN PATENT APPLICATION

(11) **EP 1 843 340 A2**
(43) Date of publication of application: **10.10.2007**
(21) Application number: 07251161.1
(22) Date of filing: 20.03.2007
(51) Int. Cl.: G11B 17/028

(54) **Recording and reproducing device provided with clamper**

(30) Priority: 31.03.2006 JP 2006099320
(71) Applicant: ORION ELECTRIC CO., Ltd., Fukui 915-8555 (JP)
(72) Inventor: Osaki, Tetsuro, c/o Orion Electric Co. Ltd., Echizen-city, Fukui 915-8555 (JP)
(74) Representative: Paget, Hugh Charles Edward

(57) **Abstract**

To reduce abnormal sound produced by contact between a clamper and a turntable between which hold and sandwich a disk. When a magnet 13 provided for a turntable 12 and a magnetic substance 21 for a clamper provided for the clamper 20 in a vertically movable manner are attracted toward each other by a magnetic force, a protrusion 24 formed in an underside of the clamper 20 pushes the turntable 12, which causes a curved part 23 of the clamper 20 to deform and causes the magnetic substance 21 for the clamper to move in an opposite direction against the attraction toward the magnet 13 by the magnetic force. This allows the curved part 23 to attenuate impact accompanying the contact between the clamper 20 and the turntable 12.

## Description

### BACKGROUND OF THE INVENTION

### Field of the Invention

The present invention relates to a recording and reproducing device provided with a clamper which holds a disk-shaped storage medium (hereinafter, simply referred to as a "disk") carried into the recording and reproducing device together with a turntable for turning the disk, and more particularly, to a recording and reproducing device provided with a clamper which suppresses abnormal sound produced by contact between the clamper and the turntable which sandwich the disk.

### Description of the Related Art

A recording and reproducing device which performs recording or reproduction on a disk such as a CD conventionally adopts a method of mounting a disk on a tray which is carried out of the recording and reproducing device, holding the mounted disk inside the recording and reproducing device or the like to perform recording or reproduction on the disk.

A general recording and reproducing device which performs recording or reproduction on a disk has a turntable on which a recording side which is one of the disk carried into the device is placed, holds the disk by and between a clamper placed above a label side opposite to the recording side and the turntable, rotates the disk together with the clamper and the turntable by a driving force of a motor, irradiates laser light onto the recording side of the rotating disk from a pickup unit, and receives the reflected laser light by the pickup unit which is a light-receiving device to thereby perform recording or reproduction on the disk.

Here, when a disk is held by and between the turntable and the clamper, attraction by a magnet is often used. For example, a magnet is generally attached to the inside of the clamper and a magnetic substance is attached to the surface of the turntable which is located opposite to the clamper so as to produce attraction between the magnet and the magnetic substance to thereby use a magnetic force when the disk is held therebetween. In such a device, when the disk is carried in to a predetermined position inside the device, the disk is held by and between the turntable and the clamper, but when no disk is placed at the predetermined position, there may be a problem that abnormal sound is generated as contact sound when the turntable and the clamper are attracted to and contact each other by the magnetic force.

As means for solving the occurrence of the above described abnormal sound, Japanese Patent Laid-Open Publication No. 2005-25838 (Patent Document 1) proposes to provide a magnetic force attenuation structure whereby when the distance between the turntable and the clamper falls below a predetermined distance, a magnetic force generated between a first magnetic substance provided on the turntable side and a second magnetic substance on the clamper side which attracts the first magnetic substance is made to attenuate and use this magnetic force attenuation structure to reduce sound produced when the clamper and the turntable attract and contact each other.

However, according to the Patent Document 1, while the magnetic force attenuation structure can reduce sound when the clamper and the turntable magnetically attract and contact each other, a notch or the like is formed substantially in the center of the clamper to forcibly deform a sheet metal member which becomes a magnetic substance to attenuate the magnetic force, and therefore there is a possibility that the clamper and the sheet metal member may be deformed or warped. Moreover, because of the increasing speed of rotation of the turntable in a recording and reproducing device in recent years, it is becoming indispensable to use a magnet having a strong magnetic force to firmly hold the disk between the clamper and the turntable so as to prevent the disk from slipping and a clamper providing powerful attraction is required. Along with the speed enhancement of rotation of the disk, there is also a demand from users for a reduction in thickness of the device and this results in the thickness of the clamper being restricted, the clamper which holds and sandwiches the disk together with the turntable being warped by under the influence of the attraction of the magnet, thus increasing the possibility that the disk may be slipped during rotation, producing an adverse influence on reading/writing of the disk.

### SUMMARY OF THE INVENTION

The present invention has been implemented in view of the above described problems and it is an object of the present invention to provide a recording and reproducing device provided with a clamper which can reduce abnormal sound generated through magnetic attraction and contact between the clamper and a turntable which hold and sandwich a disk.

The recording and reproducing device provided with a clamper according to a first aspect of the present invention is a recording and reproducing device provided with a clamper, including a turntable which rotates and a clamper arranged above the turntable to hold and sandwich a disk-shaped storage medium placed on the turntable together with the turntable by attraction of a magnetic force, wherein when the disk-shaped storage medium is not interposed between the turntable and the clamper, and a magnetic substance for the turntable provided for the turntable and a magnetic substance for the clamper provided for the clamper in a vertically movable manner attract each other by a magnetic force, a protrusion formed in an underside of the clamper pushes the turntable to thereby bend and deform a curved part formed in the clamper so that the magnetic substance for the clamper pushed upward accompanying the deformation of the curved part moves upward, which is a direction opposite to the direction of attraction of the magnetic force against the attraction by the magnetic force toward the magnetic substance for the turntable.

The recording and reproducing device provided with a clamper according to a second aspect of the present invention is the recording and reproducing device provided with a clamper according to the first aspect, wherein at least one of the magnetic substance for the turntable and the magnetic substance for the clamper is a magnet.

The recording and reproducing device provided with a clamper according to a third aspect of the present invention is the recording and reproducing device provided with a clamper according to the first aspect, wherein both the magnetic substance for the turntable and the magnetic substance for the clamper are magnets.

According to the above described recording and reproducing device provided with a clamper, even when the clamper and the turntable attract and contact each other by a magnetic force with no disk interposed between the clamper and the turntable, the curved part can attenuate impact accompanying the contact between the clamper and the turntable through magnetic attraction. Furthermore, when the clamper and the turntable attract and contact each other by a magnetic force with no disk interposed between the clamper and the turntable, since a structure is adopted in which the magnetic substance for the clamper is moved from the magnetic substance for the turntable in a direction opposite to the direction of attraction, it is possible to weaken the magnetic force produced between both magnetic substances and reduce the force of the clamper of attracting the turntable.

According to the present invention, even when the clamper and the turntable attract and contact each other by a magnetic force with no disk interposed between the clamper and the turntable, the curved part attenuates impact between the clamper and the turntable, thereby reduce abnormal sound produced when the clamper and the turntable contact each other and improve the quality of the recording and reproducing device. Furthermore, since a structure is adopted in which the magnetic substance for the clamper is provided in a vertically movable manner and the magnetic substance for the clamper is moved upward with no disk interposed between the clamper and the turntable, it is possible to weaken the magnetic force produced between the magnetic substance for the turntable and the magnetic substance for the clamper and reduce the force of the clamper of attracting the turntable.

### BRIEF DESCRIPTION OF THE DRAWINGS

FIG. 1 is a cross-sectional view showing a clamper and a turntable spaced apart from each other of a recording and reproducing device according to an embodiment of the present invention;
FIG. 2 is a plan view showing a magnetic substance for the clamper attached to the clamper according to the embodiment of the present invention;
FIG. 3 is a cross-sectional view showing the magnetic substance for the clamper attached to the clamper according to the embodiment of the present invention;
FIG. 4 is a plan view showing the clamper according to the embodiment of the present invention;
FIG. 5 is a cross-sectional view showing a disk held and sandwiched between the clamper and the turntable according to the embodiment of the present invention; and
FIG. 6 is a cross-sectional view showing the clamper and the turntable in contact with each other through magnetic attraction according to the embodiment of the present invention.

### DETAILED DESCRIPTION OF THE PREFERRED EMBODIMENTS

An embodiment as a best mode of implementing the present invention will be explained. It goes without saying that the present invention is also easily applicable to constructions other than that explained in this embodiment within a range not departing from the essence of the present invention.

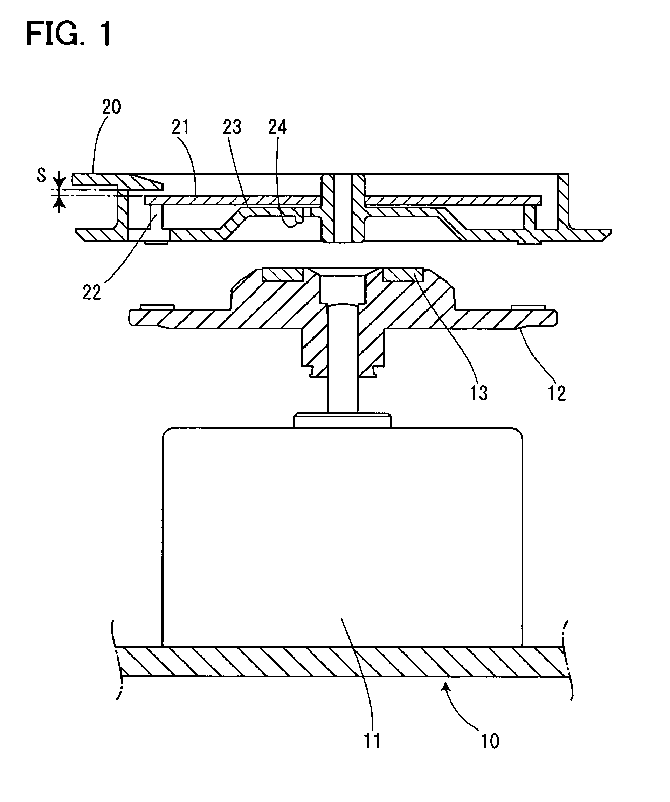

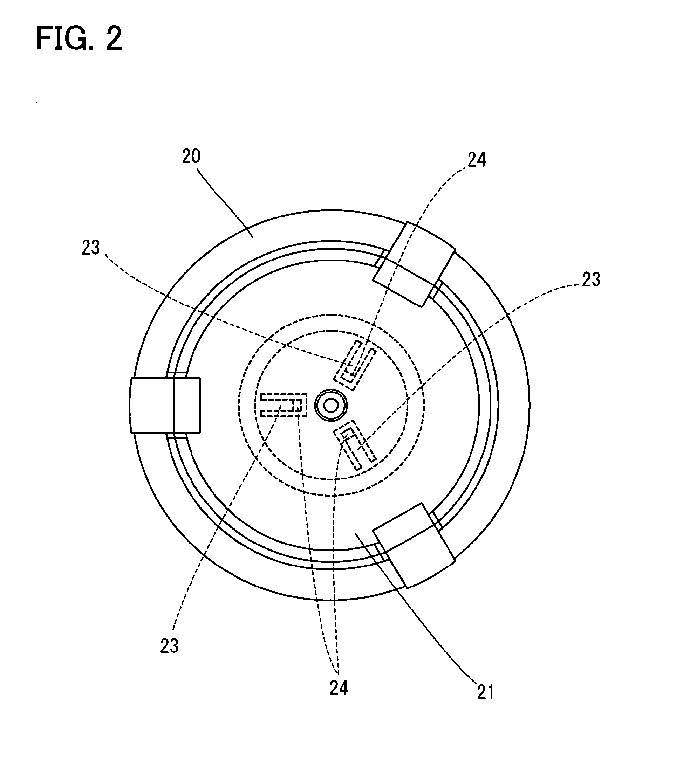

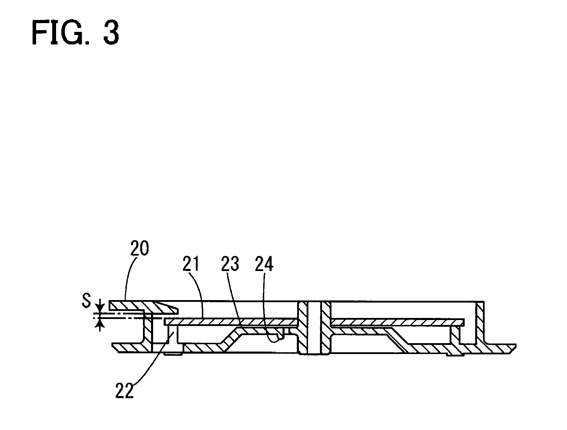

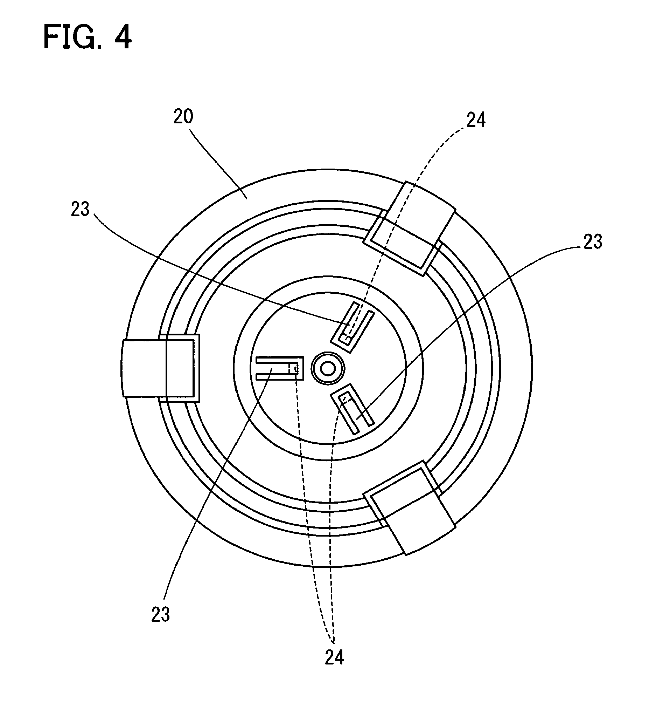

An example of the present invention will be explained using FIG. 1 to FIG. 6. FIG. 1 is a cross-sectional view showing a clamper and a turntable spaced apart from each other, FIG. 2 is a plan view showing a magnetic substance for the clamper attached to the clamper, FIG. 3 is a cross-sectional view showing the magnetic substance for the clamper attached to the clamper and FIG. 4 is a plan view showing the clamper. As shown in these figures, a recording and reproducing device 10 of this embodiment is provided with a turntable 12 which is driven to rotate by a motor 11 inside this recording and reproducing device 10 and a magnet 13 is provided at the top of this turntable 12 as a magnetic substance for a turntable.

Furthermore, a clamper 20 is provided above the turntable 12 apart from this turntable 12, a metallic magnetic substance 21 for the clamper which attracts the magnet 13 set in the turntable 12 is attached in the upper part of the clamper 20 in a vertically movable manner and the magnetic substance 21 for the clamper can move in the vertical direction within a range of a gap S.

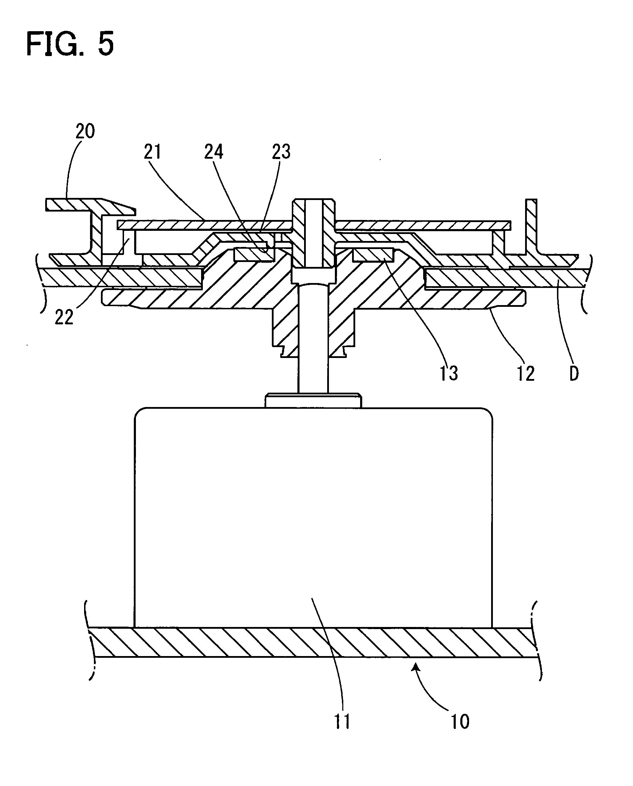

FIG. 5 is a cross-sectional view showing a disk which is a disk-shaped storage medium sandwiched between the clamper and the turntable. As shown in the same figure, the turntable 12 is configured so as to move upward from the state shown in FIG. 1, the disk D is placed by moving the turntable 12 upward from the state in which the clamper 20 is spaced away from the turntable 12 and the disk D placed on the turntable 12 is held and sandwiched between the clamper 20 and the turntable 12. Reproduction and recording on the disk D is performed while the disk D is being rotated together with the clamper 20 and the turntable 12 by being driven to rotate by the motor 11 in such a state.

Furthermore, an upward protruding rib 22 is formed in the clamper 20 and when the disk D is held and sandwiched by the clamper 20 and the turntable 12, part of the underside of the magnetic substance 21 for the clamper comes into contact with the rib 22 by being pushed against the rib 22.

An upward protruding curved part 23 is formed near the center of the clamper 20 and a downward protruding convex part 24 is formed below this curved part 23.

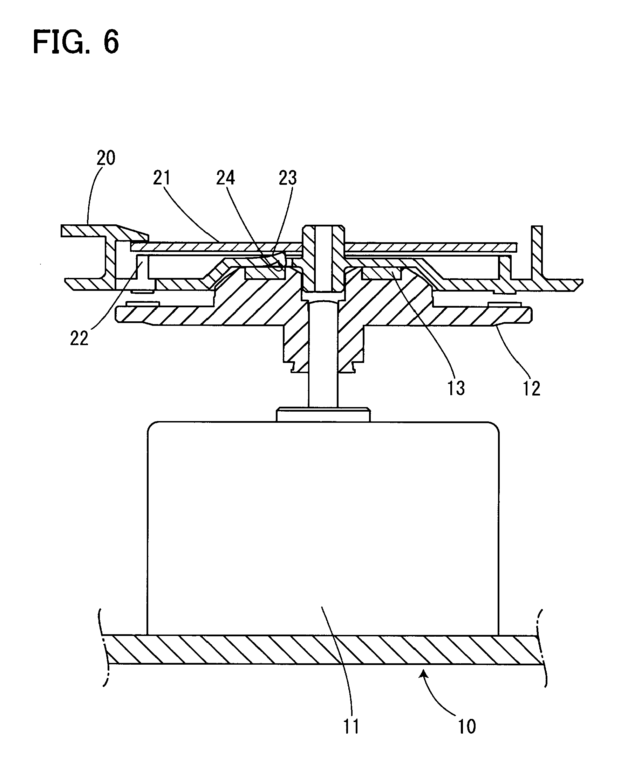

FIG. 6 is a cross-sectional view showing the clamper in contact with the turntable through magnetic attraction. As shown in the same figure, when the turntable 12 is moved up with no disk D sandwiched between the clamper 20 and the turntable 12 and this turntable 12 and clamper 20 are attracted toward each other by a magnetic force between the magnet 13 and magnetic substance 21 for the clamper, the protrusion 24 in the curved part 23 formed in the clamper 20 contacts the top surface of the turntable 12, which causes the curved part 23 to bend upward. When the curved part 23 is bent and deformed in this way, the magnetic substance 21 for the clamper is lifted up along with this deformation, and it is thereby possible to lift the magnetic substance 21 for the clamper which is being attracted downward by the magnet 13 of the turntable 12 against the attraction direction thereof. In this way, even when no disk D is placed between the clamper 20 and the turntable 12, the impact with which the clamper 20 comes into contact with the turntable 12 by attraction of a powerful magnetic force is attenuated by the curved part 23, and it is thereby possible to reduce generation of abnormal sound caused by contact between the clamper 20 and the turntable 12.

Furthermore, when the disk D is held and sandwiched between the clamper 20 and the turntable 12, the magnetic substance 21 for the clamper is attracted under the influence of the attraction of the magnet 13 provided for the turntable 12. In this case, the magnetic substance 21 for the clamper comes into contact with the rib 22 so as to be pushed against the rib 22, and therefore the clamper 20 and the turntable 12 can hold and sandwich the disk D by preventing the clamper 20 in which the rib 22 is formed from being warped upward and can prevent the sandwiched disk D from slipping due to warpage or the like of a member such as the clamper 20 even when the sandwiched disk D is rotated at a high speed by being driven to rotate by the motor 11.

As shown above, according to the recording and reproducing device 10 of this embodiment, it is possible to absorb impact through the curved part 23 so as to prevent a magnetic substance such as the magnetic substance 21 for the clamper from being deformed by attraction of a magnetic force and reduce abnormal sound produced through magnetic attraction, that is, contact between the clamper 20 and the turntable 12. Furthermore, it is possible to provide the recording and reproducing device 10 which can prevent the clamper 20 from being warped when the clamper 20 contacts the turntable 12 through magnetic attraction and prevent the disk D from slipping during rotation of the disk D, and when the disk D is not interposed between the turntable 12 and clamper 20 and the magnet 13 which is the magnetic substance for the turntable provided for the turntable 12 and the magnetic substance 21 for the clamper provided for the clamper 20 in a vertically movable manner are attracted toward each other by a magnetic force, the protrusion 24 formed in the underside of the curved part 23 formed in the clamper 20 pushes the turntable 12 to thereby cause the curved part 23 of the clamper 20 to bend and deform. The magnetic substance 21 for the clamper of the clamper 20 which is pushed upward along with the deformation of this curved part 23 is pushed upward, that is, opposite direction of attraction and moved (by an amount corresponding to the size of the gap S) by the magnetic force against the attraction of the magnetic force between the turntable 12 and the magnet 13. Even when the disk D is not interposed between the clamper 20 and the turntable 12, and the clamper 20 and the turntable 12 attract and contact each other through the magnetic force, the curved part 23 absorbs impact accompanying the contact between the clamper 20 and the turntable 12. Moreover, the curved part 23 is deformed, the substance 21 for a clamper is thereby moved upward with respect to the magnet 13 and it is possible to separate the two parts apart from each other by an amount corresponding to the gap S and thereby minimize the attraction by a magnetic force. Thus, it is possible to reduce abnormal sound produced when the clamper 20 and the turntable 12 contact each other and improve the quality of the recording and reproducing device 10. Furthermore, it is also possible to reduce the force of the turntable 12 attracting the clamper 20 by separating the magnet 13 from the magnetic substance 21 for the clamper, and thereby reduce the drive force required to move the turntable 20 in the attraction direction of the magnetic force and reduce the load on a drive mechanism (not shown).

An example of the present invention has been explained in detail so far, but the present invention is not limited to this embodiment, and, for example, the metallic magnetic substance 21 for the clamper may also be replaced by a magnet or a metallic magnetic substance may be used instead of the magnet 13 of the turntable 12 or the like, while a magnet is used as the magnetic substance 21 for the clamper, and various modified embodiments may also be applied within a range not departing from the essence of the present invention if the clamper 20 and the turntable 12 are at least attracted toward each other by a magnetic force.

## Claims

1. A recording and reproducing device provided with a clamper, comprising:
a turntable which rotates; and
a clamper arranged above the turntable to hold and sandwich a disk-shaped storage medium placed on the turntable together with the turntable by attraction of a magnetic force,
wherein when the disk-shaped storage medium is not interposed between the turntable and the clamper, and a magnetic substance for the turntable provided for the turntable and a magnetic substance for the clamper provided for the clamper in a vertically movable manner attract each other by a magnetic force, a protrusion formed in an underside of the clamper pushes the turntable to thereby bend and deform a curved part formed in the clamper so that the magnetic substance for the clamper pushed upward accompanying the deformation of the curved part moves upward, which is a direction opposite to the direction of attraction of the magnetic force against the attraction by the magnetic force toward the magnetic substance for the turntable.

2. The recording and reproducing device provided with a clamper according to claim 1, wherein at least one of the magnetic substance for the turntable and the magnetic substance for the clamper is a magnet.

3. The recording and reproducing device provided with a clamper according to claim 1, wherein both the magnetic substance for the turntable and the magnetic substance for the clamper are magnets.
